# EUROPEAN PATENT APPLICATION

(11) **EP 0 946 035 A2**
(43) Date of publication of application: **29.09.1999**
(21) Application number: 98117542.5
(22) Date of filing: 16.09.1998
(51) Int. Cl.: H04M 9/02

(54) **Two wires intercom system**

(30) Priority: 26.03.1998 IT TO980266
(71) Applicant: Bitron Video S.r.l., 10044 Pianezza (TO) (IT)
(72) Inventor: Bersano, Marco, 10093 Collegno (TO) (IT)
(74) Representative: Dini, Roberto, Dr. Ing.

(57) **Abstract**

Intercom system of the type comprising at least a central calling station (PE) and a set of remote terminals (PI) connected with it through a two-wire electric line (LN), where the central calling station has multilevel power supply means (MAL) appropriate to supply the electric line (LN) with at least a first stand-by voltage level (V1) and a second call voltage level (V2), which is higher than said first stand-by voltage level (V1), setting means for a call ID code (KEY), modulation means for the call ID code (MPEXT), where the remote terminal (PI) comprises audio transduction means (TRASD), a microprocessor (MP) associated with a power supply unit (AL), a comparator circuit (CMP) whose input is connected with the electric line (LN), appropriate to demodulate the call ID code (CODE) and transmit it to the microprocessor (MP).

According to the present invention, the output of said comparator circuit (CMP) controls the power supply unit (AL) of the microprocessor (MP) and enables operation of said power supply unit (AL) when the electric line (LN) has the second call voltage level (V2).

## Description

The present invention relates to an intercom system using only two wires to connect all internal intercoms with the external station.

Two-wire intercom systems, also called 'bus' systems, are intercom systems using only two wires to connect internal intercoms, e.g. a line of internal intercoms in an apartment house to the external station, where the external station has a keyboard for visitors to call a desired internal intercom. Therefore, said two wires will have to carry both the conversation or voice and other signals, such as a door opening signal.

Systems are already known, which use only two wires to connect the external station with internal intercoms, and allow selective communications from an external intercom site to a desired internal intercom, as well as the opening of the street door from an internal intercom. In such systems, upon reception of a corresponding call ID code a switch block setup provided for each internal intercom will connect the internal intercom with the external station, while the other internal intercoms not called remain disconnected from the two wires of the line.

Said switch, which comprises essentially a relay associated with a microprocessor for the recognition of the call ID code, remains enabled as long as the main site will send a determined working current to the two wires in the line. If said working current fails, then the switch block will open and disconnect the internal intercom.

Supply of the working current will stop only if a call is not answered or upon ending a conversation.

Other intercom systems improving the systems described above are also known.

Specifically, a comparator circuit located in their internal intercom identifies any voltage modulated codes and transfers them to the microprocessor of the internal intercom, The microprocessor of the internal intercom is also able to issue commands by modulating the voltage in the line wires to drive a higher current supply when audio is applied. Moreover, the two connecting wires in said systems can be exchanged between themselves through appropriate diode bridges without jeopardizing system operation.

However, careful impedance balancing steps are required to reach the desired result, due to the plurality of intercoms connected during voice operations, since likely voice distortion problems may arise. Moreover, said systems also require fitting each internal intercom with an identifying proper code. However, insertion during system installation of a corresponding call ID code in each intercom of every apartment or location is a rather complex and time-requiring operation, above all when it is about apartment houses with many floors and consequently many intercoms.

Moreover, said systems do not solve the working current supply problem. On the contrary, as said above, they require an additional current source when the circuit is connected to high loads, such as a loudspeaker and an electric bell.

It is the main object of the present invention to solve the above drawbacks and provide an efficient intercom system, which uses only two wires to connect all internal intercom sites with the external intercom site.

A further object of the present invention is to provide an intercom system, wherein internal intercoms are activated during the required steps only.

A further object of the present invention is to provide an intercom system with a simplified circuit during the voice step, which does not require any impedance balancing.

A further object of the present invention is to provide an intercom system, which has a low current consumption.

A further object of the present invention is to provide an intercom system, which allows connection of a large number of intercoms in parallel.

A further object of the present invention is to provide an intercom system, which is fast and simple to install, specifically for call ID codes programming.

In order to achieve such aims, it is the object of the present invention to provide an intercom and/or an intercom communication procedure as it results from the contents of the annexed claims, which form an integral part of the description herein.

Further objects, features and advantages of the present invention will become apparent from the following detailed description and annexed drawings, which are supplied by way of non limiting example, wherein:
- Fig. 1 shows the block diagram of an intercom system according to the present invention;
- Fig. 2 shows the block diagram of an external intercom site according to the present invention;
- Fig. 3 shows schematically the signals sent from the external intercom site of Fig. 2 to the line;
- Fig. 4 shows the block diagram of an internal intercom site according to the present invention;
- Fig. 5 shows a detailed circuit of the internal intercom site according to the present invention;
- Fig. 6 shows another embodiment of the circuit of Fig. 5;
- Fig. 7 shows another embodiment of the intercom system of Fig. 1.

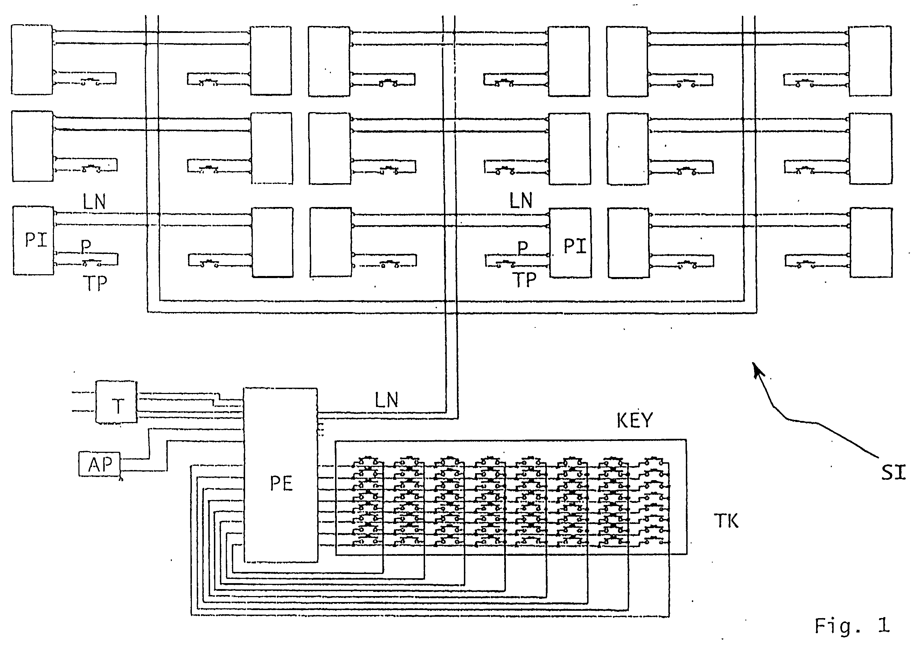

With reference to the above figures, Fig. 1 describes a basic diagram of an intercom system according to the present invention. It will be appreciated that the intercom system SI comprises an external station PE, which is connected with a call keyboard KEY, an electric street-door lock AP, a transformer T. Two line wires LN connected with a plurality of internal intercoms PI depart from the external station PE, which is the unit where the user makes the calls through the keyboard KEY. Additionally, each internal intercom PI has a respective call line on the floor P, i.e. for the call usually made at the door of the apartment to be visited, which is connected with a respective call identification key on the floor TP to make the call on the floor using the ring bell of the internal intercom PI instead of an independent ring bell. The transformer T is used to convert 220 V mains voltage to 12 V and 24 V voltages.

As it can be seen, the call keyboard KEY has a plurality of switches TK, capable of closing a different circuit between some terminals of the external station PE.

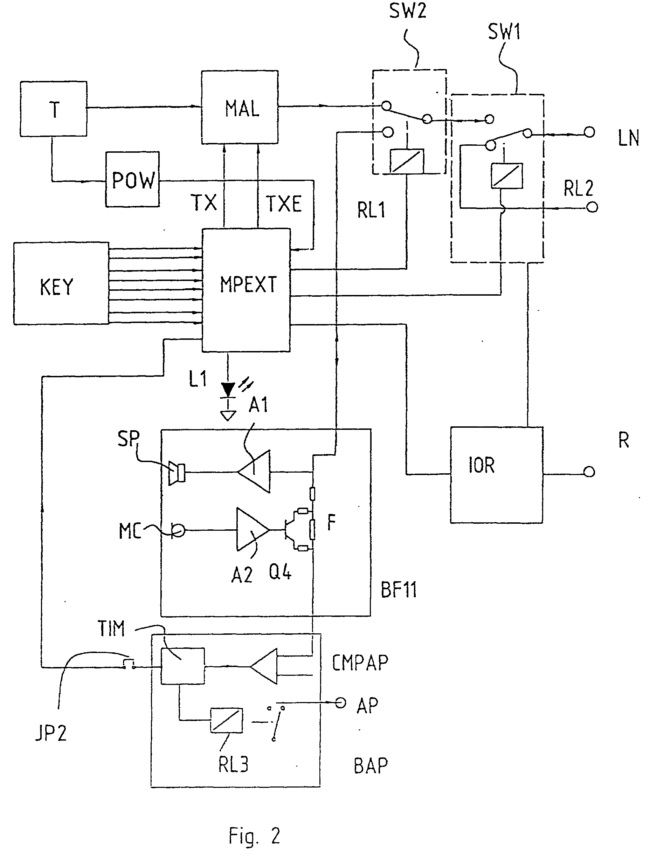

Figure 2 shows the basic diagram of the external intercom site PE.

As seen, said external station PE is associated with the call keyboard KEY. When operating one of the switches TK shown in Fig. 1, a corresponding signal is sent to an external microprocessor MPEXT. Said external microprocessor MPEXT controls a three-level supply block MAL supplied with 24 V by the transformer T through two signals TX and TXE. The block MAL is connected with the two line wires LN leading to internal intercoms PI by a first switch block SW1 and a second switch block SW2, as it will be better detailed later. Both the first switch block SW1 and second switch block SW2 are also controlled by the external microprocessor MPEXT. The external microprocessor MPEXT receives its own 5V supply voltage from a power supply unit POW also connected with the 12V output of the transformer T. Moreover, the external station PE comprises a voice block BF11 appropriate for bi-directional communications, including a loudspeaker SP and a microphone MC connected with their respective amplifiers A1 and A2. Said amplifiers A1 and A2 are connected with a two-wire terminating circuit, functionally similar to a hybrid coil, also called fork circuit F, to separate the two communication directions. Finally, the external station PE comprises a reset and switch circuit IOR, which is connected with a reset line R and is controlled by the external microprocessor MPEXT as well as a door-opener block BAP.

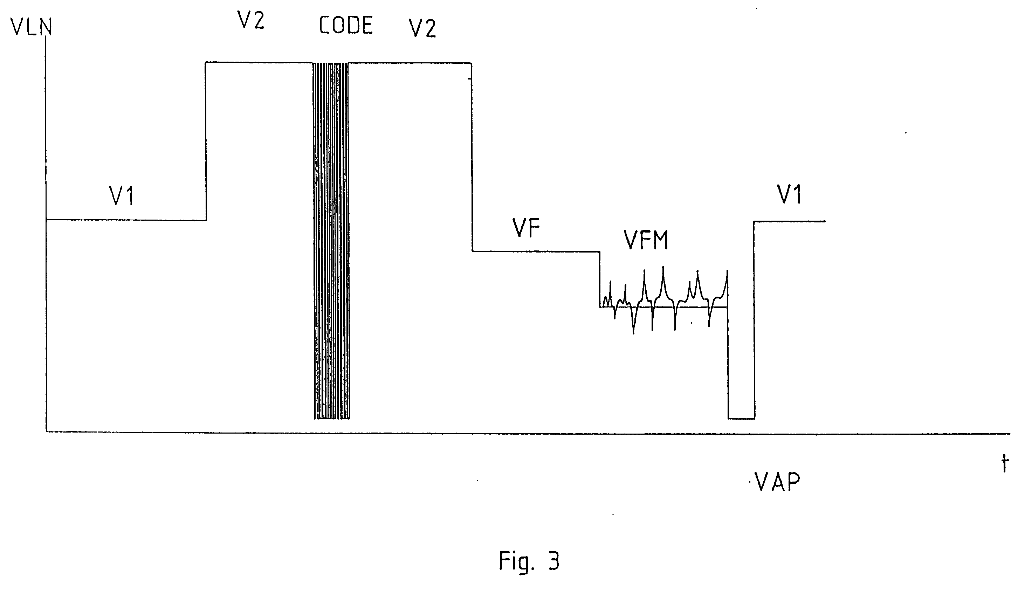

When at stand-by, the external station PE shall generate a first stand-by voltage V1 on both line wires LN, i.e. about 15V direct voltage used as a 'stand-by' voltage for all internal intercoms PI. The diagram of Fig. 3 showing voltage time diagram VLN in both line wires LN will now be considered for reference. This function is fulfilled by the three-level supply block MAL, which based on the signals TX and TXE received from the external microprocessor MPEXT is able to generate direct voltages of 15, 24 or 12 V amplitude. During this step, the external microprocessor MPEXT will also turn the signal LED L1 green lighted to indicate the operational state of the system.

Whenever visitors make a call, i.e. they press a key on the call keyboard KEY identifying the user they want to call, the external microprocessor MPEXT will generate a matching call ID code CODE according to the circuit being closed by the switch TK of the call keyboard CODE. Before sending the call ID code CODE, the external microprocessor MPEXT will turn the LED L1 red to indicate the call and bring the voltage VLN for about two seconds to both line wires LN at a direct 24V call voltage level V2, driving the three-level supply block MAL in appropriate manner. This enables all internal intercoms PI to light up. Subsequently, the external microprocessor MPEXT will pulse generate (ab. 1000 Hz frequency) the call ID code CODE in digital form, which varies according to the internal intercom PI to be called. Such a call ID code CODE is repeated five consecutive times to ensure automatic correction of likely transmission or reception interferences. The call ID code CODE takes the shape of a pulse train, which is then sent to the two line wires LN with about 23 V peak-to-peak voltage (1.2 to 24 V), as seen looking at Fig. 3.

During this step each internal intercom PI compares the call ID code CODE transmitted with a proper identifying code PCODE and only the internal intercom PI involved will enable its own ring bell. During a further 3 seconds interval the three-level supply block will generate again a supply voltage of about 24 V to supply the required voltage to the internal intercom PI, which should ring.

After these 3 seconds the external microprocessor MPEXT turn the signal LED L1 to yellow light to signal the switching over to the voice. The enable command is transmitted to a relay RL1 contained in the second switch block SW2, which will cause disconnection of the three level supply block MAL from the two line wires LN to connect the voice block output BF11. The three main functional elements of said voice block BF11 are two amplifiers A1 and A2 required to supply the audio signals of the microphone MC, the loudspeaker SP and the fork circuit F consisting essentially of a transistor Q4, whose main function is to hinder the audio signal generated by the microphone MC from reaching the amplifier input A1, so as to allow a bi-directional conversation using just two system wires, i.e. both line wires LN.

According to this operating configuration, a voice voltage level VF remains on the line wires LN till the answer from the called user will come. Said voltage level VF consists of about 12 V direct voltage, also derived from the power supply POW, which falls to about 8V modulated voice voltage level VFM, with superimposed voice modulation when conversation between the internal intercom PI and the external station PE will start. Conversation time is limited by the external microprocessor MPEXT, keeping the relay RL1 energized for about one minute.

However, it will be cut off if the user enables the electric door-lock AP through the door-opener block BAP. This automatic cut-off can be excluded operating a special jumper JP2 provided inside the external station PE.

When the door-opener key P1 of the internal intercom PI is pressed, the two line wires LN are short-circuited and the voltage VLN falls to an opening voltage level VAP of about 1V. This opening voltage level VAP is recognized by a voltage comparator CMPAP inside the door-opener block BAP, enabling a timer circuit TIM driving a relay RL3 which operates opening of the electric door lock AP. If the jumper JP2 is closed, a signal of opened electric door lock AP is also sent to the external microprocessor MPEXT, which will immediately disable the relay RL1 and restore the stand-by condition, i.e. the stand-by voltage level V1 on both line wires LN.

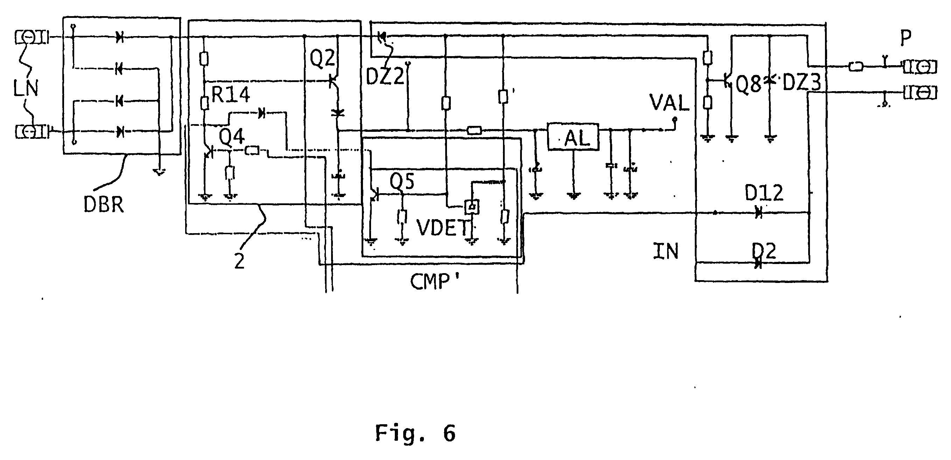

The first switch block SW1 and reset block IOR are used to obtain multi-input systems interconnecting a plurality of external stations PE according to an in-out configuration, as described in Figure 6.

The first switch block SW1, consisting essentially of the relay RL2 driven by the external microprocessor MPEXT, will exclude from or connect with the line wires LN only the external station making the call.

The reset and switch circuit IOR outputs a positive voltage to the reset line R when a call is made on the external station PE. This voltage, that will last through all the conversation time, is sent to all other external stations connected in parallel with the calling external station PE. It is also sent by the same reset and switch circuit IOR to every external microprocessor MPEXT, which will lock the call possibility, and will cause a red blinking of the LED L1, i.e. providing a 'busy' signal.

The external microprocessor MPEXT causes the LED L1 to blink with red light also when a switch TK of the call keyboard KEY remains locked over two minutes in its closed position, i.e. signalling a failure state.

All further power supplies for the circuit (12V or 5 V direct current) are supplied by the power supply unit POW generating both 12V and 5 V direct voltages as required for circuit operation.

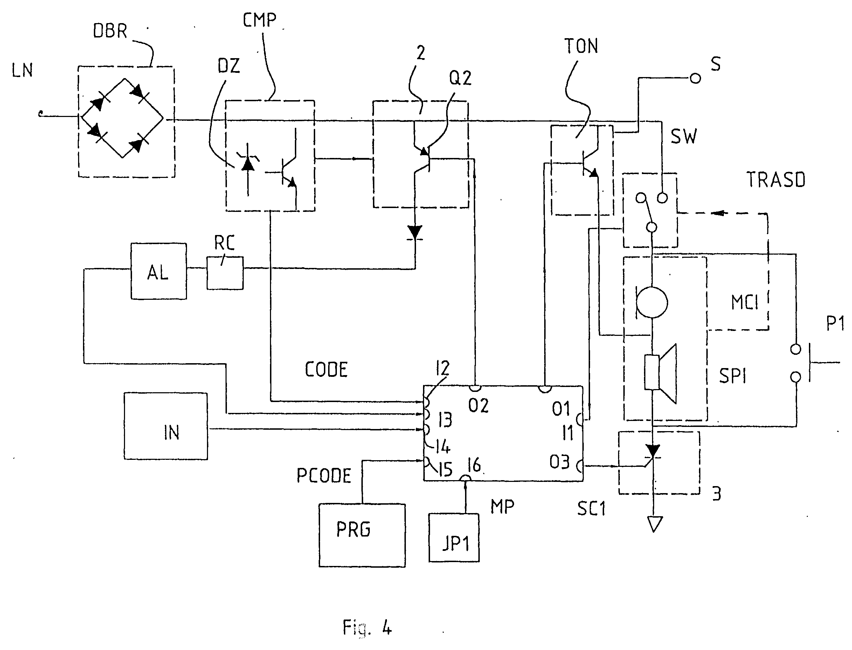

Figure 4 shows the block diagram of an internal intercom PI according to the present invention.

As it can be seen, both line wires LN are connected in parallel with a diodes bridge DBR to prevent polarity inversion, a comparator block CMP, an analog switch block 2 and a tone buffer block TON connected with a ring bell S, as well as an internal switch block SW. The comparator block CMP comprises essentially a Zener comparator circuit DZ and is connected between the two line wires LN and the control input of the analog switch block 2, the latter being connected with a supply block AL through a filter RC. Said output supply block AL supplies 5 V voltage VAL to an internal microprocessor MP. The analog switch block 2 comprises essentially a transistor Q2 also connected between the two line wires LN and the control input of the power supply block AL. However, the driving or base electrode of the transistor Q2 is connected with an output O2 of the internal microprocessor MP. The internal switch block SW is appropriate to connect the two line wires LN with an audio transducer block TRASD and is actuated by the microtelephone release. The audio transducer block TRASD matches the microtelephone audio section of the internal intercom PI; it comprises an internal loudspeaker SPI and an internal microphone MCI. Said audio transducer block TRASD is associated with a door-opener push-button P1, apt to short-circuit the audio transducer block BAP, as detailed with reference to Figs. 2 and 3. Between the audio transducer block TRASD and the ground a switch block 3 comprising a SCR diode is provided, whose control electrode is driven by an output O3 of the internal microprocessor MP.

The internal intercom PI also comprises a programming unit PRG obtained through a EEPROM memory and a call interface block IN on the floor connected with a call line P on the floor.

The function of said call interface block on the floor IN is to inhibit operation of the call key TP on the floor connected with the call line P on the floor during conversation, i.e. voice connection with the external station PE, when the voltage VLN on both line wires LN reaches the modulated voice voltage level VFM.

Finally, a learning jumper JP1 connected with an input I6 of the internal microprocessor MP is provided to allow input of the identifying code PCODE in the programming unit PRG, as better explained in the following description.

Each internal intercom PI shall fulfill the following functions:
- recognition of the call voltage level V2 from the external station PE and generation of a call tone through the tone buffer block TON;
- activation of the audio transducer block TRASD allowing total secrecy bi-directional conversation with the outside site PE through the voice block BF11 and switch block SW2;
- eventually send the door-opener signal to the external station PE through the door-opener block BAP;
- generation of a second call tone when a ring key is pressed on the floor, which energizes the floor call line P;
- allow connection with the line wires LN through the diodes bridge DBR without having to take in account the polarity.

Consequently, the internal intercom shall:
- have a very high impedance when at stand-by, so as not to unbalance the total circuit impedance;
- extract the power supply required for operation of the internal microprocessor MP from the signals on the line wires LN;
- recognize the call ID code CODE transmitted and compare it with its own identifying code PCODE (assigned by storage in the programming block PRG);
- connect the audio transducer block TRASD with the external station PE or be excluded having a very high impedance as to whether the call is either directed to it or not;
- generate different call tones, which are used to identify the calls from the external station PE from the ones made on the apartment floor.

When at stand-by, the external station PE supplies both line wires LN with the direct 15V stand-by voltage level V1, which can be connected with the internal intercom PI without any polarity consideration, thanks to the availability of the diodes bridge block DBR.

Under these conditions both the comparator block CMP and analog switch block 2 and switch block 3 containing the SCR diode SC1 are open circuits, whereby all internal intercoms PI are not operating, but in a stand-by state.

Whenever visitors make a call, i.e. they press a key on the call keyboard KEY identifying the user they want to call, the external station PE will send the direct 24V call voltage level V2 for about 2 seconds.

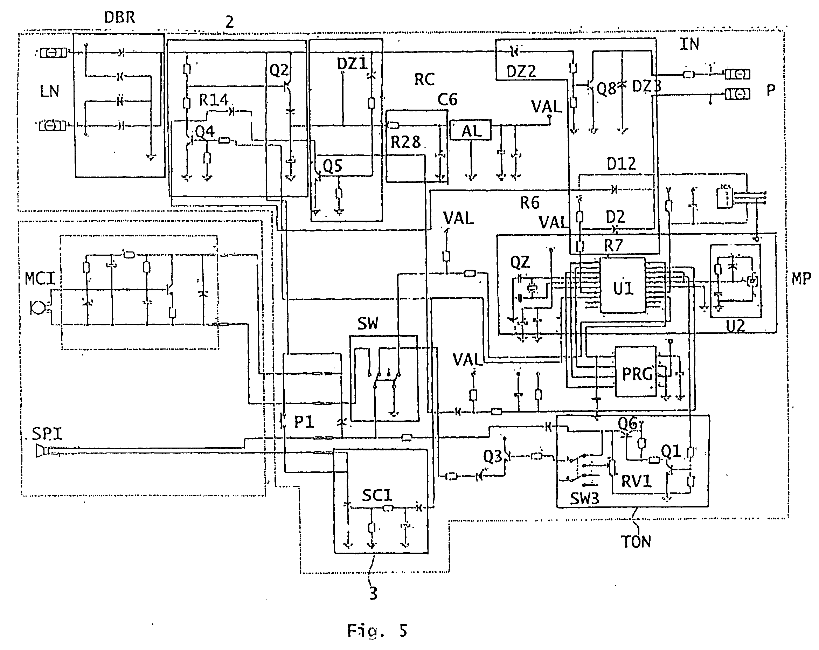

The comparator block CMP is appropriate to recognize that the input voltage has exceeded a threshold value of 17V. If this threshold value is exceeded, as better seen with reference to fig. 5, the transistor Q2 becomes conductive and consequently provides for the voltage to reach the power supply unit AL, which is then able to generate direct 5 V as required to supply the internal microprocessor MP. During this step current consumption of every internal intercom PI is kept extremely lower (less than 8 mA), e.g. to allow connection in parallel of a maximum number of 128 intercoms.

At the end of the 2 seconds time interval the external station PE transmits the call ID code CODE. i.e. a square wave digital code of about 23 V peak-to-peak amplitude, which is recognized, rebuilt and sent to the internal microprocessor MP by the comparator block CMP through its Zener comparator circuit DZ. The internal microprocessor MP will compare the call ID code CODE received with the proper identifying call ID code PCODE and if they match, it will:
- enable the analog switch block 2 to ensure power supply to the internal microprocessor MP also when the voltage VLN on both line wires LN reaches the voice voltage level VF, which is a lower one. Due to the at cut-off Zener circuit DZ, the comparator block CMP will correspond to an open circuit;
- generate a call tone appropriately amplified by the tone buffer block TON and sent to the loudspeaker SPI of the internal intercom PI contained in the audio transducer block TRASD;
- supply through its output O3 the drying signal to the gate of the SCR diode SC1 in the switch block 3.

Driving signal lasts about 40 seconds. During all this time the user called can reply by simply lifting up the microtelephone; said situation is obtained by the switching of the internal switch block SW. Once the SCR diode SC1 in the switch block 3 is started by the control supplied by the internal microprocessor MP through its output O3, as long as the current flowing through it is not interrupted, if will remain for its own nature in conduction and operate through the internal switch block SW, then disconnect the audio transducer block TRASD from the external station PE.

The internal microprocessor MP provides an input I1 appropriate to recognize the microphone release, which operates switching of the switch block SW and, consequently, internal microprocessor MP self-switches off by properly driving the analog switch block 2, e.g. removing the bias voltage from the base electrode of the transistor Q2, so as not to load the two line wires LN with its own impedance.

Thus, conversation remains assured by the switch block 3, since the SCR diode SC1 stays in conduction till the microtelephone is hanged up again and the internal switch block SW is switched.

The push-button P1, while the voice is activated, allows to short-circuit the two line wires LN, so as to supply the external station PE and specifically the door-opener block BAP with the opening voltage level VAP acting as the door-opener control.

The circuit of the internal intercom PI is now described more in detail with reference to Fig. 5.

The diodes bridge DBR consists of 4 Schottky diodes type 1N5819, through which a maximum limitation of the series voltage drop can be obtained, but allowing connection of the system wires without taking in account their polarity.

The comparator block CMP consists essentially of a transistor Q5 and a Zener diode DZ1, which form the Zener comparator circuit DZ. The Zener comparator circuit DZ is a known circuit; as described above, its insertion inside the internal intercom circuit PI allows electrical connection of the internal intercom circuit PI with the two line wires LN only if the input voltage exceeds 18V, i.e. the Zener voltage of the Zener diode DZ1. Therefore, due to the comparator block CMP, when under stand-by conditions the stand-by voltage level V1 reaches only 15 V, the internal intercom PI can disconnect itself.

If the input voltage of the comparator block CMP is below 18 V, the Zener diode DZ1 is not conducting and causes the transistor Q5 to enter a cut-off state.

When, on the contrary, the input voltage to the comparator block CMP exceeds 18 V, the Zener diode DZ1 is conductive and will saturate transistor Q5.

The transistor collector Q5 is connected with the analog switch block 2, in particular with a transistor collector Q4, which is substantially the base of the type pnp transistor Q2. The saturated transistor Q5 brings the transistor collector Q4 and the transistor base Q2 to ground voltage. Thus, the transistor Q2 will saturate a 5 V stabilizer, e.g. a stabilizer LM 2931, and let the voltage VLN on both line wires LN to be sent to the power supply input AL through the filter RC. The power supply unit AL is thus able to supply voltage VAL to the internal microprocessor MP. During reception of the call ID code CODE, the Zener diode DZ1 is alternatively conducting and cut-off, causing the transistor Q5 to be saturated and cut-off. As a result the following advantages will ensue:
- the call ID code CODE received can be obtained from the transistor collector Q5 and sent to an input I2 of the internal microprocessor MP;
- since also the transistor Q2 will be saturated and cut-off according to the same trend imposed by the call ID code CODE, as its base is connected with the transistor collector Q5, the dynamic impedance during reception of the call ID code CODE of the internal intercom PI is higher and allows connection of a higher number of devices in parallel.

During the cut-off phases of the transistor Q5, which in general should not be higher than 1 millisecond, power supply to the internal microprocessor MP is ensured by the filter RC consisting of a capacitor C6 and a resistor R28.

The analog switch block 2 is also used to ensure the required power supply to the internal microprocessor MP after a valid call has been recognized. The internal microprocessor MP will in fact saturate the transistor Q4 and consequently also the transistor Q2 bringing its own output O2 to a high logic level. Now, the power supply unit AL can receive the voltage VLN of both line wires LN, even if the voltage level on the line LN is below 18 V, e.g. it is the voice voltage level VF. The condition described above occurs after the internal microprocessor MP has recognized the call ID code CODE and found it consistent with the identifying call ID code PCODE, and has then enabled a proper internal timer by 40 seconds during which the user can lift up the microtelephone and answer the call.

Upon expiry of 40 seconds time or if the user answers the call, the internal microprocessor MP has to disconnect itself from the line LN switching off its own supply block unit AL to avoid unbalancing the voice circuit impedance. This is obtained by simply bringing the output O2 to the 'zero' logic level. During the switch-off step the supply voltage to the terminals of the internal microprocessor MP goes gradually down to zero.

The tone buffer block TON consists essentially of transistors Q1, Q6 and Q3, which receive the tone generated by the internal microprocessor MP on the output O1 and current amplify it. A push-button SW3 is also provided to choose whether to take the signal to be applied to the transistor base Q7 directly from the transistor collector Q3 (thus taking all available power) or from the cursor of a variable resistance RV1 allowing volume adjustment.

The internal microprocessor circuit MP comprises:
- an integrated microprocessor U1 managing information from peripheral;
- an integrated circuit U2, which is appropriate to continuously supervise supply voltage to the terminals of the microprocessor MP U1 and supply it with a reset pulse as soon as said supply voltage falls below 4.5V value, thus preventing possible malfunctions of the microprocessor U1 due to insufficient voltage;
- a quartz oscillator QZ to supply the integrated microprocessor with a 10 MHz frequency clock signal.

Moreover, a programming block PRG consisting of a non volatile EEPROM memory containing the own call ID code PCODE of the internal intercom PI in question is intimately associated with the operation of the internal microprocessor MP. In a possible embodiment, the programming block PRG is obtained through a selectors block, the so-called dip-switches, whose setting determines the own call ID code PCODE.

The switch block 3 containing the SCR diode SC1, as said above, is the block receiving the command from the output O3 of the internal microprocessor MP on its control electrode, which connects and will maintain connected the audio transducer block TRASD on the external station PE to allow conversation, even when the internal microprocessor MP is no longer power supplied.

The SCR diode SC1, in fact, once started by the command from the output O3 of the internal microprocessor MP remains in conduction till the current flowing through it will be removed, as it happens when the internal switch block SW is disconnected from the line LN upon hanging up the microtelephone.

Finally, the call interface block IN on the floor comprises essentially a transistor Q8 and two Zener diodes DZ3 and DZ2, both presenting12 V Zener voltage.

Moreover, a diode D2 and a resistive divider comprising resistances R6 and R7 are provided, which connect the interfacing call block IN on the floor with the internal microprocessor MP. Also a diode D12 and a resistance R14 are provided to connect a call interfacing block IN on the floor at the transistor base Q2 of the analog switch block 2. The Zener diode DZ2 is connected with the line LN, whereby when the voltage VLN on both line wires LN exceeds 12 V, such as when receiving the stand-by voltage level V1, the Zener diode DZ2 is in conduction and will saturate the transistor Q8, which is connected with it through the base electrode. Under this condition, a ground short-circuit is performed by short-circuiting the call line P on the floor through the floor call key TP, sending a ground signal to both the input 14 of the internal microprocessor MP passing through the diode D2 and the transistor Q2 through the electric path passing through the diode D12. Said transistor Q2 is then saturated, similarly to when it is driven by the transistor Q5, and it enables operation of the power supply unit AL. The internal microprocessor MP is enabled to recognize the ground signal on input 14 as representative of a floor call and operates the tone buffer block TON through its own output O1 with a different call tone than used for the call from the external station PE.

Viceversa, when on both line wires LN there is a modulated voice voltage level VFM, the Zener diode DZ2 is cut-off due to its 12V Zener voltage, i.e. higher or similar to the one available on the line wires LN, with a consequent cut-off of the transistor Q8. A short-circuit on the floor call line P caused by the floor call key TP under this condition will not bring to ground voltage neither the transistor base Q2 nor the input of the internal microprocessor MP, since the voltage level is the one imposed by the Zener diode DZ3, i.e. the floor call key TP is locked.

Summarizing, the intercom system SI described above operates as follows.

When at stand-by all internal intercoms PI are locked and consequently none of them is supplied; the two line wires LN have about 15 V direct voltage, i.e. the stand-by voltage level V1.

Whenever users make a call pressing the key on the keyboard KEY matching the user they want to call, the external microprocessor MPEXT contained in the external station PE will send a call voltage level V2 to the line LN, i.e. about 24V for about 2 seconds, to let all internal intercoms PI to be switched on. Then the call ID code CODE will follow, i.e. about 1000 Hz frequency digital code and about 23 V peak value, as said above.

During this step every internal intercom PI compares the call ID code CODE transmitted with its own call ID code PCODE and only the internal intercom PI involved will enable its own ring bell. The subsequent further 3 seconds after reception of the call ID code CODE, during which the call voltage level V2 with 24 V direct voltage is available, are used to supply the required supply voltage to the internal intercom PI that will ring. Upon expiry of these 3 seconds, all internal intercoms PI are disconnected from the system, whereas only the one called will be connected with the external station PE. During conversation, in fact, connection is ensured by the SCR diode SC1 that maintains the connection and allows the remaining circuit portion, specifically the internal microprocessor MP, to go off in order not to affect the impedance of the voice circuit, which remains formed by the audio transduction block TRASD connected through the two line wires LN with the voice block BF11 in the external station PE.

During this voice step, the external station PE will disconnect through the relay RL1 the stand-by voltage level V1 from the system wires so as to connect the voice block output BF11, which can ensure bi-directional conversation with only two wires.

As long as the called user does not answer, the two line wires LN of the system will have the voice voltage level VF, i.e. about 12 V direct voltage, which falls to about 8 V with superimposed modulation for the modulated voice voltage level VFM when the internal intercom PI is answering. The duration of conversation from the external station PE is restricted to about one minute, but will be stopped if the user actuates the electric doorlock AP.

When the door-opener push-button P1 is pressed, the two line wires LN are short-circuited and the voltage VLN falls to about 1V opening voltage level VAP. The voltage comparator CMPAP inside the external station PE will acknowledge this event and enable the timer circuit TIM controlling the electric doorlock AP. Then the intercom system SI goes directly back to its stand-by condition.

Each internal intercom PI is also equipped with the two-terminals call line P on the floor, where the likely floor call key TP has to be connected with. When said floor call key TP is pressed, the internal intercom PI will have a different ring from the standard tone to indicate a floor call.

During a conversation with the external station PE the two line wires LN are engaged to carry the conversation represented by the modulated voice voltage level VFM, and do not allow taking a supply voltage of adequate value. For this reason, during this time the floor call keys TP must be locked. This occurs through the call interface block IN on the floor, as described above.

The programming block PRG consists of a non volatile EEPROM memory containing the own call ID code PCODE of the internal intercom PI.

Said programming block PRG is fitted with a self-learning function of the own call ID code PCODE, which is operated during the system final installation step. The self-learning operation is executed pressing the external call key on the call keyboard KEY to be coupled with the internal intercom PI, and along with an appropriate learning key it matches the self-learning jumper JP1 in the internal intercom PI itself.

Inserting the self-learning jumper JP1 a ground voltage is supplied to both the analog switch block 2 that will supply the internal microprocessor MP, and the internal microprocessor MP itself as a signal for executing the self-learning function. Under this condition the internal microprocessor MP will then switch on the SCR diode SC1, allowing voice communication with the external station PE during the self-learning operation. During this step the program managing the internal microprocessor MP causes the call ID code CODE to be directly stored in the EEPROM memory of the programming block PRG as own call ID code PCODE. Finally, to confirm that storing has been executed, the internal microprocessor MP is programmed to generate a storing confirmation tone with the use of the tone block TON, which can be superimposed to the voice signal if a conversation is taking place between two ipothetic installers or transmitted by one alone.

It should be remembered that the jumper JP1 has to remain closed only during the self-learning operation of the call ID code CODE, whereas during standard operation after installation, the self-learning jumper JP1 must be left open, i.e. the element short-circuiting the terminals of said self-learning jumper JP1 has to be removed. Therefore, said element is chosen with an adequately sized housing to mechanically interfere with the closing cover of the internal intercom P1 and prevent its closure when in position. Thus, there is no likely possibility for the installer to forget the self-learning jumper JP1 closed, which would determine a learning of any call ID code CODE subsequently sent. With the above solution, in fact, it is not possible to close the housing of the internal intercom circuit PI.

The call ID code CODE is then stored in the EEPROM memory as a own call ID code PCODE. It should be remembered that since a EEPROM memory is used, i.e. an erasable and rewritable memory, the programming block PRG can be reprogrammed repeating the same procedure.

In a simplified embodiment the own call ID code PCODE is assigned to each internal intercom PI through a special dip-switch unit located inside the internal intercom PI itself.

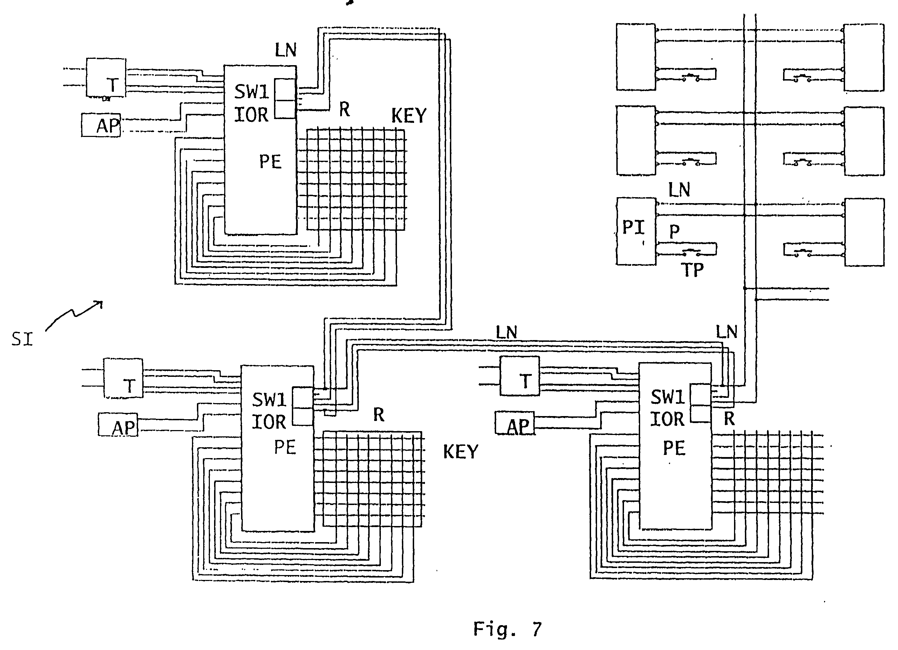

Figure 7 shows the same intercom system SI of figure 1, however with a higher number of external stations PE to indicate connection by way of example between a plurality of external stations PE.

In this instance, in each external station PE it will be enough to use the switch device consisting of the first switch block SW1 and the reset and switch circuit IOR, shown in Fig. 2. The switch device will acknowledge a call being made and automatically provide for connection of the external station PE called with the line.

The different external stations PE shown in figure 7 are connected between them in an in-out configuration, save for the first external station PE that will supply the system in stand-by condition and whose first switch block SW1 will be exclusively used to provide a busy indication. Connections between each external station PE make use of three non reversible wires, one of which is the reset line R and the other two match the two line wires LN.

Finally, figure 6 shows a possible change to the comparator block of figure 5, where a comparator block CMP' is shown, which is obtained through a voltage detector circuit VDET. Said voltage detector circuit VDET, e.g. a SEIKO integrated circuit S80745, is functionally corresponding to a comparator with hysteresis and alike the comparator CMP it will keep the transistor base Q5 grounded when the voltage VLN is below 18 V and bring the transistor Q5 to saturation when the voltage VLN exceeds 18 V. The use of the voltage detector circuit VDET instead of a Zener diode allows a more accurate switch-on threshold as well as an "on-off" control of the transistor Q5 instead of linear variations to the control voltage due to the use of a Zener diode. It should be additionally appreciated that the voltage detector circuit VDET is connected downstream of the Zener diode DZ2 pertaining to the call interface block IN on the floor. Thus, also the voltage detector circuit VDET is surely excluded like the call interface block IN on the floor when the two line wires LN have either the voice voltage VF or the modulated voice voltage level VFM.

The features of the intercom system described above and in the annexed drawings will now be clear.

According to the above description also the advantages of the intercom system object of the present invention will be clear.

The intercom system according to the present invention has every intercom installation advantageously fitted with a comparator circuit capable of recognizing a call voltage level sent from the external station and also capable of controlling switch-on of the whole intercom circuit and specifically its microprocessor. On the other hand, said comparator circuit is advantageously the same as used for the call ID code demodulation.

According to the present invention it is also possible to entirely disactivate those intercoms sites where the call ID code does not match. Therefore, intercoms not called are connected with the line wires only during the steps related to the call being sent and to the relevant call ID code.

Moreover, the intercom selected will self-exclude a portion of its own circuits, namely its own microprocessor during conversation, with only the audio transduction portion remaining connected with the line wires.

This means a great advantage during conversation, since:
- a simple fork type circuit can be set up in the external station to support conversation with the sole enabled internal intercom;
- since the audio transduction portion is the only impedance available on the line wires, complex adaptation circuits or impedance balance are not required.

A further advantage is represented by the possibility of easily programming during installation the own call ID codes for each internal intercom through a self-learning technique providing call ID codes insertion directly from the keyboard of the external station. A further advantage is also ensured by the possibility of repeating this operation many times using a non volatile EEPROM memory.

It is obvious that many changes are possible for the man skilled in the art to the intercom system described above by way of example, without departing from the novelty spirit of the innovative idea, and it is also clear that in practical actuation of the invention the components shown in detail may often differ in form and size from the ones described and be replaced with technical equivalent elements.

For instance, the same call ID code can be assigned to two internal intercoms to allow conversation in parallel with one same external station.

## Claims

1. A intercom system comprising at least a central calling station (PE) and a set of remote terminals (PI) connected with it through a two-wire electric line (LN), where the central calling station (PE) has multilevel supply means (MAL) appropriate to supply the electric line (LN) with at least a first stand-by voltage level (V1) and a second call voltage level (V2) differing from said first stand-by voltage level (V1), setting means for a call ID code (KEY), modulation means of the call ID code (MPEXT), where the remote terminal (PI) comprises audio transduction means (TRASD), a microprocessor (MP) associated with a supply (AL), a comparator circuit (CMP) whose input is connected with the electric dine (LN), appropriate to demodulate the call ID code (CODE) and transmit it to the microprocessor (MP), characterized in that the output of said comparator circuit (CMP) controls the power supply unit (AL) of the microprocessor (MP) and enables operation of said power supply unit (AL) when the electric line (LN) has the second call voltage level (V2).

2. An intercom system according to claim 1, characterized in that the second call voltage level (V2) is higher than the first stand-by voltage level (V1).

3. An intercom system according to claim 2, characterized in that an analog switch means (2) driven by the microprocessor (MP) is provided, which is appropriate to lock power supply unit operation (AL) of the microprocessor (MP) after an initial operation time.

4. An intercom system according to claim 3, characterized in that a switch means (3) operated by the microprocessor (MP) is provided, which is appropriate to keep audio transduction means (TRASD) power supplied when the microprocessor (MP) is off.

5. An intercom system according to claim 3, characterized in that the comparator circuit (CMP) controls the power supply unit (AL) of the microprocessor (MP) driving the analog switch block (2).

6. An intercom system according to claim 5, characterized in that the comparator circuit (CMP) comprises a Zener comparator circuit (DZ) whose output is connected with the analog switch means (2) driving the power supply unit (AL).

7. An intercom system according to claim 6, characterized in that the analog switch means (2) comprises a first transistor (Q2) whose emitter is connected with the electric line (LN) and whose collector is connected with the power supply unit (AL), driven by a logic signal emitted at a driving output (O2) from the microprocessor (MP).

8. An intercom system according to claim 6, characterized in that the comparator circuit (DZ) comprises a Zener diode (DZ1) and a transistor (Q5).

9. An intercom system according to claim 8, characterized in that the first transistor (Q2) of the analog switch means (2) is driven by the microprocessor (MP) through a second transistor (Q4), said second transistor (Q4) having its base connected with the driving output (O2) of the microprocessor (MP) and the collector connected both with the base of the first transistor (Q2) and the collector of the transistor (Q5) of the comparator block (CMP).

10. An intercom system according to claim 4, characterized in that said switch means (3) is obtained through a SCR diode (SC1) connected between the audio transduction means (TRASD) and the ground, and is driven by a logic signal emitted at a driving output (O3) from the microprocessor (MP).

11. An intercom communication method, which provides for sending a call signal from a central calling station (PE) to remote terminals connected with it through a two-wire electric line (LN) and send a call ID code (CODE) modulating a voltage on the electric line (LN), said remote terminals (PI) fitted with audio transduction (TRASD) means, microprocessors (MP) appropriate to recognize said call ID codes (CODE) and deactivate said audio transduction means (TRASD), characterized in that it provides the following steps:
a) to maintain a first stand-by voltage level (V1) on the electric line (LN)
b) to send a second call voltage level (V2) to the electric line (LN) for a determined time in response to a call command;
c) to use a voltage comparing means (CMP) in the remote terminal to supply the microprocessor (MP) after reception of the second call voltage level (V2);
d) to send the call ID code to the remote terminals (PI) through the electric line (LN);
e) to have a switch means (3) operated in the remote terminal called by its microprocessor (MP) that recognizes its own call ID code (PCODE) for the connection of the audio transduction means (TRASD) with the electric line (LN);
f) to have an analog switch means (2) operated in the remote terminal called by its microprocessor (MP) that recognizes its own call ID code (PCODE) for the cut-off of power supply to said microprocessor (MP) after an initial operation time.

12. An intercom communication method according to claim 11, characterized in that prior to execution of step e) in the central calling station (PE) connection with the electric line (LN) is switched by the multilevel supply (MAL) to a two-wire bi-directional voice circuit.

13. An intercom communication method according to claim 12, characterized in that it provides to assign one same call ID code (PCODE) to at least two remote terminals (PI).

14. An intercom system comprising at least a central calling station (PE) and a set of remote terminals (PI) connected with it through an electric line (LN), where the central calling station has setting means for a call ID code (KEY), modulation means for the call ID code (MPEXT), where the remote terminal (PI) comprises a microprocessor (MP associated with a power supply unit (AL), a comparator circuit (CMP) whose input is connected with the electric line (LN), appropriate to recognize a call ID code (CODE) consistent with a preset call ID code (PCODE), where further programming means (PRG) are provided to set the preset call ID code (PCODE) in the microprocessor (MP), characterized in that said programming means (PRG) consist of an electric programmable non-volatile memory, in particular a EEPROM memory, and that in said electric programmable non-volatile memory the preset call ID code (PCODE) is put in sending the matching call ID code (CODE) through the setting means of a call ID code (KEY) and operation on a learning switch (JP1).

15. An intercom system according to claim 14, characterized in that the learning switch (JP1) in its closed position is appropriate to operate the analog switch means (2) for power supply to the microprocessor (MP) and control the execution step of the self-learning function to the microprocessor (MP).

16. An intercom system according to claim 15, characterized in that the learning switch (JP1) in its closed position will mechanically prevent a closure of the housing containing the remote control (PI).
